# EUROPÄISCHE PATENTANMELDUNG

(11) **EP 0 636 432 A1**
(43) Veröffentlichungstag der Anmeldung: **01.02.1995**
(21) Anmeldenummer: 94110452.3
(22) Anmeldetag: 05.07.1994
(51) Int. Cl.: B21C 37/08, H01B 13/00

(54) **Verfahren zur Herstellung eines schraubenlinien- oder ringförmig gewellten Metallrohres**

(30) Priorität: 15.07.1993 DE 4323649
(71) Anmelder: kabelmetal electro GmbH, D-30002 Hannover (DE)
(72) Erfinder: Ziemek, Gerhard, Dr., D-30853 Langenhagen (DE)

(57) **Zusammenfassung**

Bei einem Verfahren zur Herstellung eines schraubenlinien- oder ringförmig gewellten Metallrohres (10) wird ein Metallband (2) von einer Vorratsspule (1) abgezogen, zu einem Schlitzrohr geformt, das Schlitzrohr längsnahtverschweißt und in das geschweißte Rohr mittels eines exzentrisch zur Rohrlängsachse umlaufenden ringförmigen Wellwerkzeuges (9) eine schraubenlinien- oder ringförmige Wellung eingebracht. Dabei wird ein Schlitzrohr mit einem Verhältnis von Außendurchmesser D zu Wanddicke s von über 100 geformt, das Schlitzrohr mit einem Laser oder durch TIG-Pulsschweißen verschweißt und die Wellung mit einem Verhältnis von Wellsteigung T bzw. Wellenabstand Tp zu Welltiefe t von weniger als 3.75 erzeugt.

## Beschreibung

Die Erfindung betrifft ein Verfahren zur Herstellung eines schraubenlinien- oder ringförmig gewellten Rohres nach dem Oberbegriff des Anspruchs 1.

In der Kabelindustrie werden gewellte Metallrohre als Schutzmantel für Kabel und als Innen- und/oder Außenleiter von koaxialen Hochfrequenzkabeln eingesetzt, die ein Verhältnis von Außendurchmesser D des gewellten Metallrohres zur Wanddicke s des gewellten Metallrohres von 30 - 100 haben. Das Verhältnis von Steigung T bzw. Wellenabstand zu Welltiefe t liegt bei mindestens 3.75. Auch ist die Verwendung eines gewellten Metallrohres als Leitungsrohr für Fluide bekannt.

Für die genannten Produkte haben sich die oben zitierten Werte in der Praxis durchgesetzt, denn ein gewelltes Rohr soll flexibel, formstabil, d.h. quersteif und einbeulfest sein. Das gewellte Metallrohr stellt einen maßgeblichen Kosten- und Gewichtsfaktor der jeweiligen Kabelkonstruktion dar.

Maßgeblich für das Gewicht ist die Wanddicke und der Außendurchmesser des gewellten Rohres sowie der Werkstoff. Da der Außendurchmesser und der Werkstoff in der Regel vorgeschrieben bzw. optimiert sind,läßt sich eine Reduzierung des Gewichtes nur durch eine Reduzierung der Wanddicke erreichen.

Eine Unterschreitung der Wanddicke bei dem bekannten Wellrohr bei sonst gleichem Außendurchmesser führt zu einem instabilen Wellrohr, d.h. im Falle eines Schutzmantels für elektrische Kabel werden die Wellenberge des Schutzmantels beim Aufwickeln auf eine Kabeltrommel verformt. Darüber hinaus wird das gewellte Rohr zu einem ovalen Querschnitt verformt, wodurch die Übertragungseigenschaften bei einem koaxialen Hochfrequenzkabel nachteilig beeinflußt werden.

Aus der CA-PS 603 527 sind Metallrohre bekannt, welche als Mantel für elektrische Kabel verwendet werden können. Die Rohre bestehen aus einer harten Aluminiumlegierung oder aus weichem Stahl, d.h. aus einem Werkstoff mit einer Zugfestigkeit von 10 - 35 kp/mm² (7-25 tons per square inch). Um bei solchen Rohren bei gleicher Qualität die Wanddicke reduzieren zu können, wird vorgeschlagen, daß der Innendurchmesser zwischen 75 % und 85 % des äußeren Durchmessers des Wellrohres, daß der Abstand der Wellen zueinander zwischen 15 und 25 % des äußeren Durchmessers und die Wanddicke des Rohres zwischen 0,5 und 2 % des äußeren Wellrohrdurchmessers betragen soll. Der Wanddicke - gemessen in mm - wird ein absoluter Wert von 0,06 mm zugegeben.

Aus dem angegebenen Bedingungen errechnet sich z.B. bei einem Rohr mit einem Außendurchmesser von 40 mm ein Verhältnis von Außendurchmesser zu Wanddicke von 46,5 - 182 und ein Verhältnis von Wellenabstand zu Welltiefe 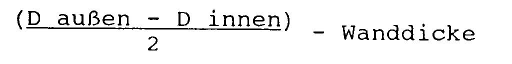
von 1.25 - 4.67. Untersuchungen im Hause der Anmelderin haben ergeben, daß sich Rohre mit einem D/s Verhältnis von mehr als 100 und/oder einem Verhältnis von Wellenabstand zu Welltiefe von weniger als 3.75 mit dem bekannten Wellverfahren, bei welchem sich ein drehbar in einem Wellerkopf gelagerter Wellerwälzring auf der Oberfläche des geschweißten Rohres abwälzt und dabei die Rohrwandung eindrückt und die Wellung erzeugt, nicht herstellen lassen.

Der Erfindung liegt die Aufgabe zugrunde, das bekannte Wellverfahren dahingehend zu verbessern, daß stabile, quersteife aber dennoch flexible Wellrohre insbesondere für Kabelmäntel elektrischer Kabel mit gegenüber den bekannten Wellrohren verringerter Wanddicke hergestellt werden können.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

Durch die Erfindung wird die Stabilität und die Beulfestigkeit durch eine weniger tiefe Wellung und einen geringeren Wellenabstand erhöht. Durch die neue Wellform wird die Stabilität und Beulfestigkeit auch unter extremsten Bedingungen aufrechterhalten, da die auf das bekannte Wellrohr je Wellenberg wirkenden Kräfte in viele Einzelkräfte aufgeteilt werden, die darüber hinaus auf einen in sich stabilen Wellenberg geringerer Abmessung und deshalb erhöhter Stabilität einwirken.

Ein weiterer Vorteil der Erfindung ist darin zu sehen, daß durch die Auswahl des Schweißverfahrens die Wärmeeinflußzone minimiert wird.

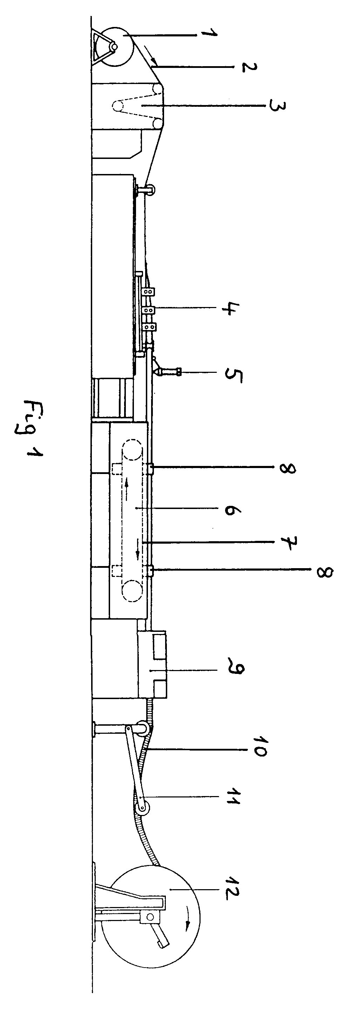

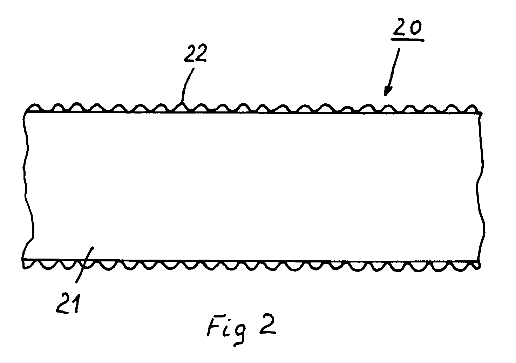

Die Erfindung ist anhand der in den Figuren 1 und 2 schematisch dargestellten Ausführungsbeispiele näher erläutert.

Ein von einer Vorratsspule 1 ablaufendes Metallband 2 wird zunächst in einer Anlage 3 gereinigt und an seinen Bandkanten besäumt. Dieses so vorbereitete Band 2 wird einer Formeinrichtung 4 zugeführt, in welcher das Band 2 allmählich zu einem Schlitzrohr geformt wird. Das Schlitzrohr wird mittels einer Schweißeinrichtung 5 zu einem Rohr mit Längsschweißnaht verschweißt. Als Schweißeinrichtung wird entweder eine Laserschweißeinrichtung - in diesem Fall kann unter Umständen die Reinigungsanlage 3 entfallen - oder aber eine Argonarc - Pulsschweißeinrichtung (TIG-Pulsschweißeinrichtung) verwendet. Beiden Schweißverfahren ist gemeinsam, daß eine schmale Schweißnaht erreicht wird, d.h. der Bereich der Wärmebeeinflussung, die zu einer Erweichung des Metallbandes führt, ist eng begrenzt. Die das geschweißte Rohr transportierende Abzugsvorrichtung 6 ist ein sogenannter Spannbackenabzug, bei dem mehrere an einer endlosen in Richtung der Pfeile angetriebenen Kette 7 geführte Spannbackenpaare 8 an dem Rohr angreifen. Mit 9 ist eine Wellvorrichtung bezeichnet, von der aus das gewellte Metallrohr 10 über einen sogenannten Tänzer 11 gesteuert auf eine Trommel 12 gelangt. Die Wellvorrichtung 9 arbeitet nach dem sogenannten Wälzwellerprinzip, wie es beispielsweise aus der DE-AS 1 086 314 bzw. der DE-OS 1 916 357 bekannt ist. Wenn mit der beschriebenen Vorrichtung elektrische Kabel mit einem gewellten Metallmantel hergestellt werden sollen, wird in nicht dargestellter Weise die Kabelseele im Bereich der Formeinrichtung 4 in das noch offene Schlitzrohr eingeführt.

Wenn gewellte Metallrohre hergestellt werden sollen, kann es von Vorteil sein, wenn die Schweißnaht vor dem Wellen durch Kaltverformung wieder verfestigt wird.

Die Figur 2 zeigt ein elektrisches Kabel 20 im Schnitt, welches aus einer Kabelseele 21 und einem Kabelmantel 22 besteht. Über dem Kabelmantel 22 kann noch ein nicht dargestellter Kunststoffmantel angeordnet sein.

Der Kabelmantel 22 ist ein nach der Lehre der Erfindung hergestelltes gewelltes Metallrohr, welches folgende Abmessungen hat

| | |
|---|---|
| Außendurchmesser D | = 41 mm |
| Innendurchmesser d (≏ Durchmesser der Kabelseele) | = 36,4 mm |
| Wanddicke s | = 0,4 mm |
| Welltiefe t | = 1,9 mm |
| Wellsteigung T (≏ Abstand zweier Wellenberge) | = 5,4 mm |

Für ein solches Wellrohr ergibt sich ein Verhältnis von
D/s = 41/0.4 = 102,5
und ein Verhältnis von
T/t = 5.4/1.9 = 2,84
Ein Wellrohr mit den o.a. Abmessungen konnte mit den aus der DE-AS 10 86 314 und DE-OS 1 916 357 bekannten Verfahren bislang nicht hergestellt werden.

## Patentansprüche

1. Verfahren zur Herstellung eines schraubenlinien- oder ringförmig gewellten Metallrohres, bei welchem ein Metallband von einer Vorratsspule abgezogen, zu einem Schlitzrohr geformt, das Schlitzrohr längsnahtverschweißt und in das geschweißte Rohr mittels eines exzentrisch zur Rohrlängsachse umlaufenden ringförmigen Wellwerkzeuges eine schraubenlinien- oder ringförmige Wellung eingebracht wird, gekennzeichnet durch die Kombination folgender Merkmale
a) es wird ein Schlitzrohr mit einem Verhältnis von Außendurchmesser D zu Wanddicke s von über 100 geformt,
b) das Schlitzrohr wird mit einem Laser oder durch TIG-Pulsschweißen verschweißt,
c) die Wellung wird mit einem Verhältnis von Wellsteigung T bzw. Wellenabstand Tp zu Welltiefe t von weniger als 3.75 erzeugt.

2. Verfahren nach Anspruch 1, dadurch gekennzeichnet, daß das Schlitzrohr mit Argonarcpulsschweißen verschweißt wird.

3. Verfahren nach Anspruch 1 oder 2, dadurch gekennzeichnet, daß die Schweißnaht kaltverformt wird.

4. Verfahren nach einem der Ansprüche 1 bis 3, dadurch gekennzeichnet, daß das geschweißte Rohr vor dem Wellen durch Ziehen im Durchmesser reduziert wird.
